Europäisches Patentamt

(19) European Patent Office

Office européen des brevets

(11) Publication number: **0 060 043**
**A1**

## (12) EUROPEAN PATENT APPLICATION

(21) Application number: **82300840.4**

(51) Int. Cl.³: **B 62 B 15/00**

(22) Date of filing: **18.02.82**

(30) Priority: **04.03.81 GB 8107051**

(43) Date of publication of application:
**15.09.82 Bulletin 82/37**

(84) Designated Contracting States:
**AT BE CH DE FR IT LI LU NL SE**

(71) Applicant: **LANDSAILING LIMITED**
**Fir Tree Lane Trading Estate**
**Groby Leicester(GB)**

(72) Inventor: **Hampton, Michael William**
**23, Piper Drive Long Whatton**
**Near Loughborough Leicester(GB)**

(72) Inventor: **Nickell-Lean, Martin**
**29, Welford Road**
**Blaby Leicester(GB)**

(74) Representative: **Smith, Geoffrey Leonard et al,**
**Marks & Clerk 57/60 Lincoln's Inn Fields**
**London WC2A 3LS(GB)**

(54) Sail powered vehicle.

(57) In windsurfing, steering is obtained by moving the mast about a universal joint to shift the centre of wind pressure. In applying a similar steering method to a vehicle mounted on wheels (or possibly skids), at least one wheel (or skid) 8 has to be pivotable to accommodate the wind-induced steering. In order to provide self-centering, without inducing uncontrolled oscillation or wobble, the wheel 8 is mounted about steering axis to inclined forwardly at an angle X between 5° and 50° and its axis of rotation is offset forwardly by a distance Y, e.g. of up to 3 inches (7.5 cm), to reduce the distance by which the point of ground contact of the wheel 8 is behind the point of intersection of the steering axis 10 with the ground.

FIG.I.

EP 0 060 043 A1

Title:-   <u>Sail Powered Vehicle</u>

This invention relates to sail-powered vehicles.

Land yachts have been known for a long time.  These are essentially vehicles with a conventional yacht rigging and manual steering using steerable wheels.  Recently, there has evolved a form of sailing known as sail boarding or windsurfing.  In such a craft, the mast is tiltable on a universal joint at its base.  Steering is effected by moving the centre of pressure of the single sail forwards or backwards by tilting the mast.  It has been suggested that this form of sailing may be applied to land, including snow or ice, vehicles.  It will be seen that in such an application the steering is not by steerable wheels (or skids) but by the variation of the position of the centre of pressure created by the wind on the sail, and the wheels or skids must be pivoted so as to accommodate the steering and be self-centering.  Also the self-centering must be such that no dangerous oscillations or wobble can develop.

It will be appreicated that such vehicles would be intended primarily for sporting purposes so that speeds may be quite high so that control and stability are essential for the safety of the users.

Also, while primarily intended for a wheeled vehicle, it will be understood that on snow or ice skis or skates, or a combination of such, (e.g. a ski/skate), may be fitted instead of wheels and the expression "wheel or skid" is intended to embrace all such variations.

In accordance with the invention, there is provided a sailing vehicle comprising a vehicle body or board having front and rear wheels or skids, the front wheel or skid arrangement being pivotable about a steering axis and self centering and the rear wheels or skids being mounted in fixed steering relationship to the body or board, in which the front wheel or skid arrangement is pivoted about a steering axis forwardly and downwardly inclined at an angle between 5° and 50° from the vertical so that the point of contact between the or each wheel or the centre of pressure of the or each skid is behind the steering axis.

The cycle of inclination is preferably between 10° and 35°.

Preferably, the point of connection of the or each wheel or skid is offset forwardly of the steering axis while still ensuring that the point of contact or centre of pressure is behind the steering axis. Such offsetting may for example be up to 3 inches (7.5 cm).

Such an arrangement gives the required self-centering force without its being so large that the front wheels go into an uncontrolled oscillation or wobble.

The invention will be further described with reference to the accompanying drawing, in which:

Figure 1 is a diagrammatic elevation showing the principal features of the wheel arrangements of a wheeled sailing vehicle in accordance with one form of the invention; and

Figure 2 shows a modification.

The single figure of drawing shows diagrammatically a vehicle body or board 1 of a land based sail board, and it also shows the foot of a mast 2 which is attached by means of a universal joint 3 to a mounting position 4. Two alternative mounting positions 4a and 4b are also shown, it being up to the user to use the most appropriate mounting position having regard to the rig chosen and the operating conditions. The actual rig and its mounting form no part of the present invention. A pair of non-steerable rear wheels 5 are mounted for rotation about an axis 5a generally fixed in relation to the board 1, although some shock absorbing suspension may be provided if required. The actual means of such mounting are not illustrated as they form no part of the present invention.

The chassis and body or board 1 of the vehicle are required, both to provide mounting points for the wheel or skids, and also to provide a suitable platform on which the driver or pilot can carry out his required actions to control the craft. Normally the pilot would be in a standing position and the platform must therefore be capable of allowing him to stand and move around on it both in front of and behind the mast and to either side. The chassis must be adequately strong but on most applications should also have sufficient spring to absorb shocks transmitted through the wheels.

Beneath the platform the wheels or skids are mounted and these require one, two or more fixed wheels 5 towards the rear of the craft located such that they allow forward motion but resist sideways sliding. The axle position for the rear wheel or wheel is important in its relationship to the location points for the mast foot and is placed sufficiently far behind the mast for satisfactory steering when the mast is tilted forward and backwards.

At its forward end, the board 1 is tilted upwardly as shown at 1a. Mounted on the up-turned portion 1a there is a bearing tube 6 capable of withstanding end thrusts and angled forwards from the vertical by an angle X lying between 5° and 50°, and preferably between 10° and 35°. The bearing rotatably supports a wide section hollow fork 7 for a front wheel 8 and it will be seen that the bearing is mounted on the rear part of the fork 7 and the wheel 8 is mounted on the forward part of the fork 7 so as to offset the axis of rotation 9 of the wheel 8 somewhat forwardly of the axis 10 of the bearing. A curved fork could alternatively be used. The offsetting is by a distance Y, normally less than 3 inches (7.5 cm), and it will be seen that this offsetting of the axis of rotation 9 from the bearing axis 10 has the effect of shifting the point of contact between the wheel and the ground forward by a distance Y, but at the same time maintaining the point of contact to the rear of the point of intersection of the axis 10 with ground level 11. It will thus be seen that when the wheel 8 is not pointing forwards, there will be a self-correcting or self-centering force in a direction to straighten the wheel. The geometry used creates a situation whereby with increasing deflection of the front wheel the self-centering force increases to a maximum, following which any further deviation from the central line of the front wheel the self-centering force reduces. This effectively produces a form of geometric damping and overcomes any tendency to instability or steering wobble. In addition the steering bearing arrangement is equipped with a light variable damping mechanism effected by pre-loading the bearing. This provides an additional time related damping mechanism to back up and support the geometrical damping as previously described. This self-centering force is capable of being overcome by the steering force applied by the wind through the mast 2 and sail (not shown). When the steering effect is not being applied, the wheel will tend to centralise. If the axis of the wheel were mounted on the steering pivot axis 10, the self-centering force would tend to be too high which would cause the wheel to hunt about the stable position and go into a mode of oscillation or wobble, so the wheel is displaced forward by the distance Y to reduce this self-centering force.

The geometry of the system is fairly critical to obtain self-centering without the over-correction leading to wobble, and it is found with angles X between 5° and 50°, preferably between 10° and 35°, the distance Y is generally somewhere less than 3 inches (7.5 cm). The size of the wheel aoes effect the geometry but with most conveniently usable wheel sizes, these angles and displacements are appropriate.

In one particular arrangement, the angle X is chosen at 23° and the axis 9 of the wheel 8 is mounted some 1 inch (2.5 cm) forward to the axis 10 using a 16 inch (40 cm) overall diameter wheel. Stability of the system is maintained within a limited tolerance on either side of these figures. This stability is necessary in order to provide a steering correction in case the front wheel should strike a bump or pot-hole or other obstruction.

Although the arrangement has been shown with only a single front wheel 8 mounted in a fork 7, it will be understood that it may be appropriate for a pair of front wheels to be mounted in a bogie with a similar arrangement of off-setting of the axis of rotation forward of the steering axis 10. Also, similar considerations apply when the wheels are replaced by skids in the form of skis or skates or skis/skates. In such cases there is an extended zone of contact with the ground, but it is the position of the centre of pressure over this zone of contact which is critical to the provision of self-correction. It is also to be noted that the steering becomes less critical if the forward skid, replacing the wheel 8, is capable of sliding sideways. This is achieved by having this forward skid rounded along its edges.

For use on snow and ice, the rear wheels 5 are preferably each replaced by a combined ski and skate which is similar in appearance to a shortened ski but is equipped with a rib or ribs rib along the bottom of the ski. The or each such rib has sharp squared off edges providing good lateral resistance on either snow or ice. When working on ice, the rib alone makes contact with the ice, in the manner of a skate.

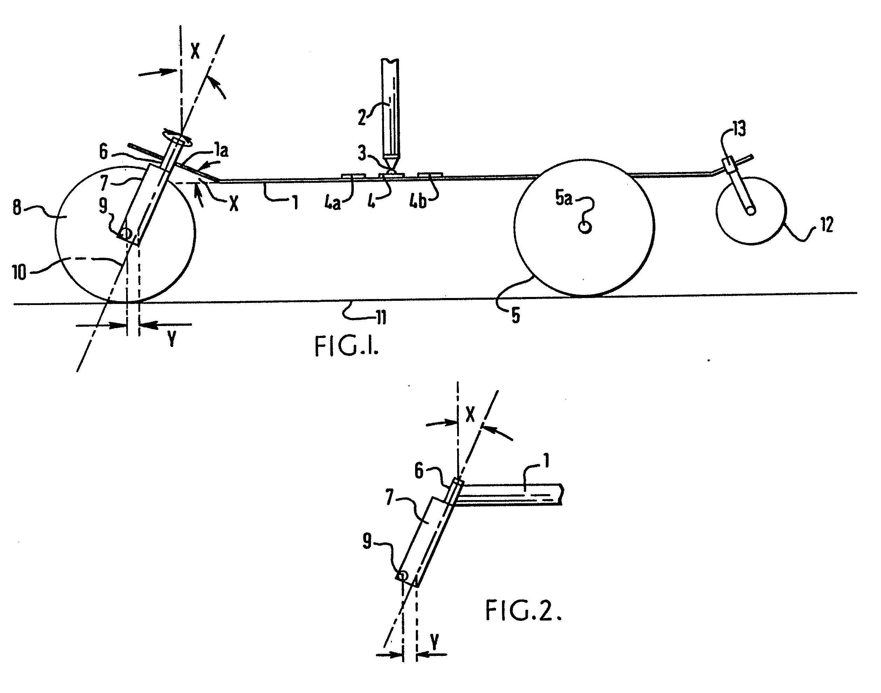

In the arrangement of Figure 2, the upturned end 1a of the body or board 1 is omitted and the bearing tube 6 is mounted at the angle X to the body or board 1 itself.

Various modifications may be made within the scope of the invention.

CLAIMS

1.    A sailing vehicle comprising a vehicle body or board having front and rear wheels or skids, the front wheel or skid arrangement being pivotable about a steering axis and the rear wheels or skids being mounted in fixed steering relationship to the body or board, characterised in that the front wheel or skid arrangement (8) is pivoted about a steering axis (10) forwardly and downwardly inclined at an angle (X) between 5° and 50° from the vertical so that the point of contact between the or each front wheel (8) or the centre of pressure of the or each front skid is behind the steering axis (10) whereby the arrangement is self centering.

2.    A sailing vehicle according to claim 1,characterised in that the angle of inclination (x) is between 10° and 35°.

3.    A sailing vehicle according to claim 1 or 2, characterised in that the point of connection (9) of the or each front wheel or skid (8) is offset forwardly of the steering axis (10) while still ensuring that the point of contact or centre of pressure is behind the steering axis (10).

4.    A sailing vehicle according to claim 3, characterised in that the point of connection (9) is offset forwardly by a distance of up to 7.5 cm.

5.   A sailing vehicle according to any of the preceding claims, characterised in that the front wheel or skid arrangement is provided with a light centering spring means to maintain stability when the front wheel or skid arrangement is out of contact with the ground.

6.   A sailing vehicle according to any of the preceding claims, characterised by comprising rear wheels (5) and brakes on the rear wheels operable both independently and conjointly.

7.   A sailing vehicle according to any of the preceding claims, characterised by comprising an additional rear wheel (12) or skid normally out of ground contact but adapted to contact the ground to limit rearward tilting of the body or board about the said rear wheels (5) or skids.

FIG.I.

FIG.2.

European Patent
Office

**EUROPEAN SEARCH REPORT**

0060043

Application number

EP 82 30 0840

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 572 740 (RYPINSKI) <br><br> *Column 3, lines 51-68; figures 1,9* | 1,2,3, 6 | B 62 B 15/00 |
| A | DE-A-2 738 141 (ALTHAUS) <br> *The whole document* | 1,5 | |
| A | DE-A-2 823 499 (ZARGES) | | |
| A | DE-A-2 733 647 (SUTOR) | | |
| A | DE-A-2 612 984 (RIEDEL) | | |
| | ----- | | |

| TECHNICAL FIELDS SEARCHED (Int. Cl. ³) |
|---|
| B 62 B 15/00 |

The present search report has been drawn up for all claims

| Place of search | Date of completion of the search | Examiner |
|---|---|---|
| THE HAGUE | 07-06-1982 | SCHMITTER J.M. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                           

& : member of the same patent family, corresponding
   document

EPO Form 1503. 03.82